# EUROPÄISCHE PATENTSCHRIFT

(11) **EP 2 129 889 B1**
(45) Veröffentlichungstag und Bekanntmachung des Hinweises auf die Patenterteilung: **24.08.2011**
(21) Anmeldenummer: 08716171.7
(22) Anmeldetag: 27.02.2008
(51) Int. Cl.: F02B 29/04, F01P 3/18, F02M 25/07

(54) **VORRICHTUNG ZUR LADELUFTKÜHLUNG, SYSTEM ZUR TURBOAUFLADUNG UND/ODER LADELUFTKÜHLUNG, VERFAHREN ZUR LADELUFTKÜHLUNG**
CHARGE-AIR COOLING DEVICE, SYSTEM FOR TURBOCHARGING AND/OR CHARGE-AIR COOLING, METHOD FOR CHARGE-AIR COOLING
DISPOSITIF DE REFROIDISSEMENT D'AIR DE SURALIMENTATION, SYSTÈME DE SURALIMENTATION PAR TURBOCOMPRESSEUR ET/OU DE REFROIDISSEMENT D'AIR DE SURALIMENTATION ET PROCÉDÉ DE REFROIDISSEMENT D'AIR DE SURALIMENTATION

(30) Priorität: 28.02.2007 DE 102007010123; 29.05.2007 DE 102007025172
(43) Veröffentlichungstag der Anmeldung: 09.12.2009
(73) Patentinhaber: Behr GmbH & Co. KG, 70469 Stuttgart (DE)
(72) Erfinder: WEGNER, Jürgen, 73054 Eislingen/Fils (DE); HUSTER, Joachim, 88048 Berg (DE)
(74) Vertreter: Grauel, Andreas
(86) Internationale Anmeldenummer: PCT/EP2008/001649
(87) Internationale Veröffentlichungsnummer: WO 2008/104402

(56) Entgegenhaltungen:
- EP-A- 0 149 466
- EP-A- 0 874 142
- EP-A- 1 191 206
- EP-A- 1 505 274
- WO-A-03/102396
- DE-A1- 2 105 657
- DE-A1- 3 504 038
- DE-A1- 10 351 845
- DE-A1- 19 654 362
- FR-A- 2 886 340
- GB-A- 2 112 918
- JP-A- 60 101 223
- JP-A- 2004 027 901
- NL-C2- 1 027 948

## Beschreibung

Die vorliegende Erfindung betrifft eine Vorrichtung zur Ladeluftkühlung für einen Verbrennungsmotor eines Kraftfahrzeugs sowie ein System zur Ladeluftkühlung und/oder Turboaufladung eines Verbrennungsmotors eines Kraftfahrzeugs sowie ein Verfahren zur Ladeluftkühlung für einen Verbrennungsmotor eines Kraftfahrzeugs.

Zur Leistungsverbesserung von Verbrennungsmotoren wird die aus der Umgebung angesaugte Luft mittels eines Verdichters eines Turboladers einstufig oder mehrstufig aufgeladen. Die verdichtete Luft erwärmt sich dabei und muss deshalb nach dem Verdichten wieder abgekühlt werden. Dies erfolgt mittels eines Wärmetauschers zur Ladeluftkühlung. Dabei kann die aufgeladene Luft direkt oder indirekt gekühlt werden. Bei der direkten Ladeluftkühlung wird die aufgeladene Luft direkt von der Umgebungsluft gekühlt. Bei der indirekten Ladeluftkühlung wird die Ladeluft von einem Kühlmittel gekühlt, welches wiederum von Umgebungsluft gekühlt wird.

Ferner ist bekannt, bei einer mehrstufigen insbesondere zweistufigen, Ladeluftaufladung die Ladeluft mehrstufig zu kühlen.

Des Weiteren kann die Ladeluft nach dem Verdichten in einer ersten Verdichterstufe mittels eines Zwischenkühlers abgekühlt werden, bevor die Ladeluft erneut in einer weiteren Verdichterstufe auf ein höheres Druckniveau verdichtet wird. In einem weiteren Wärmetauscher zur Ladeluftkühlung erfolgt dann die erneute Abkühlung der Ladeluft, bevor diese dem Verbrennungsmotor eines Kraftfahrzeugs zugeführt wird.

Aus der DE3504038 ist eine Kühlanlage für eine mit einem Abgasturbolader versehene wassergekühlte Brennkraftmaschine bekannt, wobei im Ansaugsystem der Maschine ein Zwischenkühler zur Abkühlung der vom Turbolader abgegebenen Ladeluft bekannt ist.

Aus der EP1505274 ist ein Ladeluftkühler bekannt mit einem von einem Kühlmedium durchströmbaren Kühleinsatz, der im ladeluftführenden Verbindungskanal angeordnet ist.

Aus der DE10351845 sind parallele Wärmetauschermodule bekannt, die mit einem Abgaseintrittsgehäuse verbunden sind und einen Hochtemperaturabgaswärmetauscher bilden und parallele Wärmetauschermodule, die mit einem Abgasaustrittsgehäuse verbunden sind und Niedertemperaturabgaswärmetauscher bilden.

Die Gehäuse der Wärmetauschermodule sind zur Halterung an den Enden mit Flanschen versehen. Der Hochtemperaturabgaswärmetauscher ist mittels einer Befestigungsbrille starr am Abgaseintrittsgehäuse fixiert. An einem anderen Ende ist der Hochtemperaturabgaswärmetauscher an einem Flansch in einer Lagerplatte gelagert, so dass Zwangsspannungen vermieden werden.

Aus der EP0874142 ist eine Vorrichtung zur integrierten Führung von flüssigen und gasförmigen Medien einer Brennkraftmaschine mit einem benachbart zu einem Zylinderkopf an der Brennkraftmaschine gehaltenen Gehäuse und mit einem Befestigungsflansch für eine Aufladeeinrichtung für Verbrennungsluft bekannt.

Die Wärmetauscher zur Ladeluft bzw. Abgaskühlung sind dabei jeweils mit einer Vielzahl von Leitungen bzw. Rohren verbunden, die Kühlmittel den Wärmetauschern zuführen bzw. Kühlmittel aus den Wärmetauschern abführen. Diese Leitungen müssen meist mit einer Vielzahl von verschiedenen Halteelementen im Motorraum befestigt werden. Das Kühlmittel zum Kühlen der Ladeluftkühler oder der anderen Wärmetauscher wie beispielsweise Abgaskühler kann dabei aus dem Kühlmittelkreislauf zur Motorkühlung des Verbrennungsmotors abgezweigt werden. Dabei ist eine Vielzahl von Schnittstellen erforderlich, die beispielsweise als Rohrverzweigungselemente ausgebildet sind.

JP 60101223 offenbart eine Vorrichtung zur Ladeluftkühlung für einen Verbrennungsmotor eines Kraftfahrzeugs mit einem ersten Wärmetauscher zur Ladelufthochdruckkühlung und einem zweiten Wärmetauscher zur Ladeluftniederdruckkühlung, wobei die Wärmetauscher über ein Gehäuse und einen im Gehäuse untergebrachten Kühlwasserführungsbereich mit Kühlmittelzuleitung und Kühlmittelableitung verbunden sind.

WO 03/102396 A1 offenbart ein Modul mit drei Wärmetauschern innerhalb eines Gehäuses, das auf die Form eines Motorblocks angepasst ist, und bei dem die Wärmetauscher separat Kühlmittel-beströmt sind.

EP 1 191 206 A2 offenbart ein Kühlsystem mit zwei Wärmetauschern, bei welchen Kühlfluid den Wärmetauschern zur Verfügung gestellt wird und zwischen den Wärmetauschern in Serie durch interne Kühlanschlüsse oder Kavitäten in einem Turboladergehäuse fließen kann.

DE 196 54 362 A1 offenbart einen Wärmetauscher in Form eines Scheibenkühlers mit einer Adapterplatte, die mindestens zwei, vorzugsweise vier verschiedene Plattenkühler mit ein und demselben Kühlmittelstrom vorsorgen kann.

Es ist Aufgabe der vorliegenden Erfindung, eine Vorrichtung der eingangs genannten Art zu verbessern. Insbesondere soll der für Kühlmittelversorgungsleitungen zum Zuführen bzw. Abführen von Kühlmittel zur bzw. von den Wärmetauschern zur Ladeluft und/oder Abgaskühlung verringert werden. Gleichzeitig soll die Zahl der Schnittstellen und der erforderlichen Verzweigungselemente der kühlmittelführenden Leitungen verringert werden. Darüber hinaus soll insbesondere die Montagezeit, die erforderlich ist, um Kühlmittelversorgungsleitungen an den Wärmetauschern anzuschließen, verringert werden. Ferner soll insbesondere die Montage selbst vereinfacht werden.

Die Aufgabe wird durch die Merkmale des Anspruchs 1 gelöst.

Es wird eine Vorrichtung zur Ladeluftkühlung für einen Verbrennungsmotor eines Kraftfahrzeugs vorgeschlagen, der einen ersten Wärmetauscher, insbesondere zur Ladelufthochdruckkühlung, aufweist. Die Vorrichtung weist ferner zumindest einen zweiten Wärmetauscher, insbesondere zur Ladeluftniederdruckkühlung, auf. Ferner ist zumindest ein erstes Verbindungsmittel zur Verbindung des ersten Wärmetauschers und des zumindest einen zweiten Wärmetauschers miteinander vorgesehen. Die Vorrichtung weist zumindest eine Kühlmittelzuleitung zur Beströmung zumindest eines Wärmetauschers mit Kühlmittel und zumindest eine Kühlmittelableitung zur Ableitung von Kühlmittel aus zumindest einem der Wärmetauscher auf. Die zumindest eine Kühlmittelzuleitung und die zumindest eine Kühlmittelableitung sind im Wesentlichen vollständig in dem zumindest einen Verbindungsmittel angeordnet.

Unter dem einen "ersten Wärmetauscher zur Ladelufthochdruckkühlung" ist insbesondere ein Ladeluftkühler zu verstehen, in dem Ladeluft gekühlt wird, die zumindest mittels zweier Verdichtungsstufen eines Turboladers auf ein Hochdruckniveau verdichtet wurde. Der erste Wärmetauscher kann aber auch ein Abgaskühler und/oder ein Ölkühler und/oder ein Verdampfer bzw. Kondensator einer Klimaanlage sein.

Unter dem "zweiten Wärmetauscher zur Ladeluftniederdruckkühlung" ist insbesondere ein Ladeluftkühler zu verstehen, der Ladeluft kühlt, die aus der Umgebung angesaugt und mittels einer ersten Verdichterstufe eines Turboladers auf ein Ladeluftniederdruckniveau verdichtet wurde.

Unter "Ladeluftniederdruck" ist dabei zu verstehen, dass die Ladeluft einen höheren Druck als die Umgebungsluft aufweist, wobei der Ladeluftniederdruck jedoch geringer ist als der Ladelufthochdruck.

Der Ladeluftniederdruck wird dabei von einer ersten Verdichterstufe eines Turboladers erzeugt. Der Ladelufthochdruck wird von einer zumindest zweiten Verdichterstufe eines Turboladers erzeugt.

Über die zumindest eine Kühlmittelzuleitung wird Kühlmittel zumindest einem Wärmetauscher, insbesondere dem Ladelufthochdruckwärmetauscher, und/oder dem Ladeluftniederdruckwärmetauscher, zugeführt.

Die zumindest eine Kühlmittelableitung dient der Abführung von Kühlmittel aus zumindest einem Wärmetauscher, insbesondere dem Ladelufthochdruckwärmetauscher und/oder dem Ladeluftniederdruckwärmetauscher.

Gemäß einer besonders bevorzugten ersten Variante der Erfindung ist das zumindest eine Verbindungsmittel in Form eines ersten Verbindungselements gebildet, vorzugsweise eines von einem Gehäuse eines Wärmetauschers separat bereitgestellten Verbindungselements gebildet. Insbesondere eine Verbindungsplatte dient dabei zur Verbindung des ersten Wärmetauschers und des zumindest zweiten Wärmetauschers miteinander.

Gemäß einer besonders bevorzugten zweiten Variante der Erfindung ist das Verbindungsmittel als ein integraler Teil eines Wärmetauscher-Gehäuses gebildet, insbesondere als eine Wand des Gehäuses entlang der Längserstreckung des Gehäuses, vorzugsweise als ein integraler Teil eines Wärmetauscher-Gehäuses für einen weiteren dritten Wärmetauscher, insbesondere einen Abgaswärmetauscher.

Die zumindest eine Kühlmittelzuleitung und die zumindest eine Kühlmittelableitung sind im Wesentlichen vollständig, insbesondere vollständig, in dem zumindest einen ersten Verbindungsmittel, insbesondere in der zumindest einen ersten Verbindungsplatte oder die Wand des Gehäuses angeordnet bzw. in diese integriert.

Gemäß einer vorteilhaften Weiterbildung der Erfindung verzweigt sich die Kühlmittelzuleitung zumindest in einen ersten Zuströmteilkanal zur Beströmung der ersten Wärmetauschers, insbesondere des Ladelufthochdruckwärmetauschers und einen zweiten Zuströmteilkanal zur Beströmung des zweiten Wärmetauschers, insbesondere den Ladeluftniederdruckwärmetauscher. Der erste Zuströmteilkanal und der zumindest eine zweite Zuströmteilkanal sind im Wesentlichen vollständig, insbesondere vollständig, in dem zumindest einen ersten Verbindungselement, insbesondere der zumindest einen ersten Verbindungsplatte oder der Wand des Gehäuses, angeordnet.

Gemäß einer vorteilhaften Weiterbildung der Erfindung verzweigt sich der erste Zuströmteilkanal in einen dritten Zuströmteilkanal und in einen vierten Zuströmteilkanal zur Beströmung des ersten Wärmetauschers, insbesondere des Hochdruckladeluftkühlers, wobei der dritte Zuströmteilkanal und der vierte Zuströmteilkanal im Wesentlichen vollständig in dem ersten Verbindungselement, insbesondere der Verbindungsplatte oder der Wand des Gehäuses, angeordnet sind. Auf diese Weise kann Bauraum besonders vorteilhaft eingespart werden. Ferner kann die Montage der Vorrichtung besonders vereinfacht werden.

Gemäß einer vorteilhaften Weiterbildung der Erfindung weist das Verbindungsmittel, insbesondere die zumindest eine Verbindungsplatte oder die Seitenwand des Gehäuses, einen ersten Abströmteilkanal zur Ableitung von Kühlmittel aus dem ersten Wärmetauscher, insbesondere aus dem Hochdruckladeluftkühler, auf. Ferner weist das Verbindungsmittel zumindest einen zweiten Abströmteilkanal zur Ableitung von Kühlmittel aus dem zweiten Wärmetauscher, insbesondere aus dem Niederdruckladeluftkühler auf. Der erste Abströmteilkanal und der zumindest eine zweite Abströmteilkanal münden in die Kühlmittelableitung. Auf diese Weise kann die Zahl der Kühlmittelanschlussleitungen besonders vorteilhaft verringert werden und die Montage vereinfacht werden.

Gemäß einer vorteilhaften Weiterbildung der ersten Variante der Erfindung weist das erste Verbindungselement, insbesondere die Verbindungsplatte, eine erste Flanschfläche zum Anflanschen des ersten Wärmetauschers, insbesondere des Ladelufthochdruckwärmetauschers und/oder eine zweite Flanschfläche zum Anflanschen des zumindest zweiten Wärmetauschers, insbesondere des Ladeluftniederdruckwärmetauschers, auf. Auf diese Weise können der zumindest eine erste Wärmetauscher und der zumindest eine zweite Wärmetauscher besonders vorteilhaft an das erste Verbindungselement angeflanscht werden. Ferner können der zumindest eine erste Wärmetauscher und der zweite zumindest eine zweite Wärmetauscher besonders vorteilhaft miteinander verbunden werden, wobei die Kühlmittelzufuhr und/oder Ableitungen besonders vorteilhaft in das zumindest eine Verbindungselement integriert werden können.

Gemäß einer vorteilhaften Weiterbildung der ersten Variante der Erfindung sind die erste Flanschfläche und die zweite Flanschfläche im Wesentlichen einander gegenüberliegend angeordnet und/oder parallel zueinander angeordnet. Auf diese Weise können der erste Wärmetauscher und der zweite Wärmetauscher besonders bauraumsparend miteinander verbunden werden.

In einer vorteilhaften Weiterbildung der ersten Variante der Erfindung können die erste Flanschfläche und/oder die zweite Flanschfläche einen Winkel zwischen 0° und 90° zueinander aufweisen.

In einer vorteilhaften Weiterbildung der ersten Variante der Erfindung sind ein zweites Verbindungselement sowie ein dritter Wärmetauscher zur Abgaskühlung für Abgas der Brennkraftmaschine, insbesondere ein Abgaswärmetauscher, vorgesehen.

Das zweite Verbindungselement, insbesondere die zweite Verbindungsplatte, dient zur Verbindung des dritten Wärmetauschers, insbesondere des Abgaswärmetauschers, mit dem ersten Verbindungselement, insbesondere der ersten Verbindungsplatte. Auf diese Weise können der erste Wärmetauscher, der zweite Wärmetauscher und der dritte Wärmetauscher besonders vorteilhaft miteinander verbunden werden. Ferner können Kühlmittelzu- bzw. -ableitungen für den ersten Wärmetauscher und/oder den zweiten Wärmetauscher und/oder dem dritten Wärmetauscher besonders vorteilhaft in das erste Verbindungselement, insbesondere die erste Verbindungsplatte, und/oder in das zweite Verbindungselement, insbesondere die zweite Verbindungsplatte, integriert werden.

Gemäß einer vorteilhaften Weiterbildung der ersten Variante der Erfindung kann erfindungsgemäß ferner vorgesehen sein, dass das erste Verbindungselement, insbesondere die Verbindungsplatte, und das zweite Verbindungselement, insbesondere die zweite Verbindungsplatte, im Wesentlichen rechtwinklig zueinander angeordnet sind und/oder einteilig ausgebildet sind.

Gemäß einer Weiterbildung der zweiten Variante der Erfindung verläuft die Kühlmittelzuleitung und die Kühlmittelableitung entlang der Längserstreckung, wenigstens abschnittsweise, im Wesentlichen parallel zueinander und gegenläufig durchströmbar. Diese Anordnung einer Kühlmittelzuleitung und einer Kühlmittelableitung in einem als integralen Teil eines Wärmetauschergehäuses gebildeten Verbindungsmittel hat sich als besonders platzsparend und einer vorteilhaften Wärmetauschergehäuseform angepasst erwiesen.

Vorzugsweise ist gemäß einer Weiterbildung der zweiten Variante der Erfindung die Kühlmittelzuleitung und die Kühlmittelableitung getrennt durch einen, vorzugsweise nebeneinanderliegenden Kühlmitteleintritt und Kühlmittelaustritt zu dem ersten oder zweiten Wärmetauscher.

Im Rahmen der zweiten Variante hat es sich als besonders vorteilhaft erwiesen, dass die Kühlmittelzuleitung zwischen einem Kühlmitteleintritt und einem Zuströmteilkanal zur Beströmung des zweiten Wärmetauschers bzw. ersten Wärmetauschers verläuft. Ebenfalls ist es im Rahmen der zweiten Variante bevorzugt, dass die Kühlmittelableitung zwischen einem Abströmteilkanal zur Beströmung des zweiten Wärmetauschers bzw. ersten Wärmetauschers und einem Kühlmittelaustritt verläuft. Ein solcher durch die Kühlmittelzuleitung und Kühlmittelableitung vorgegebener Kühlmittelverlauf ist besonders vorteilhaft hinsichtlich des an den entsprechenden Stellen angenommenen Temperaturniveaus des Kühlmittels. Als besonders bevorzugt im Rahmen der zweiten Variante hat sich erwiesen, das Kühlmittel mittels der Kühlmittelzuleitung zunächst einem ersten Wärmetauscher, insbesondere zur Ladelufthochdruckkühlung, zuzuführen und danach, mittels der Kühlmittelzuleitung einem zweiten Wärmetauscher, insbesondere zur Ladeluftniederdruckkühlung, zuzuführen.

Eine besonders bevorzugte Weiterbildung der zweiten Variante der Erfindung sieht vor, dass die Kühlmittelzuleitung eine Abzweigung für einen Zuströmteilkanal zur Beströmung des dritten Wärmetauschers und die Kühlmittelableitung eine Abzweigung für einen Abströmteilkanal zur Beströmung des dritten Wärmetauschers aufweist. Diese Weiterbildung ist insbesondere bevorzugt für das als integraler Teil eines Wärmetauschergehäuses des dritten Wärmetauschers gebildeten Verbindungsmittels, wobei der dritte Wärmetauscher besonders bevorzugt ein Abgaswärmetauscher ist.

Grundsätzlich wird es durch die zweite Variante der Erfindung in besonders vorteilhafter Weise möglich, ein Verbindungsmittel mit Kühlfunktion direkt in einem Wärmetauschergehäuse, insbesondere dem Wärmetauschergehäuse eines dritten, bevorzugt Abgaswärmetauschers, zu integrieren. Grundsätzlich kann das Verbindungsmittel auch als ein integraler Teil des Wärmetauschergehäuses des ersten Wärmetauschers oder zweiten Wärmetauschers gebildet sein. In jedem Fall wird eine besonders kompakte Anordnung von Wärmetauschern mit einem im Modul als integraler Teil eines Wärmetauschergehäuses gebildeten Verbindungsmittel optimiert. Somit entfallen zusätzlich auch Abdichtungsnotwendigkeiten zwischen einem Gehäuse und einer Kühlmittelplatte.

Vorzugsweise ist das Gehäuse mit dem Verbindungsmittel als ein Gussteil gebildet, d.h. vorzugsweise aus dem gleichen Material gebildet. Dadurch werden insbesondere Temperaturspannungen oder sonstige mechanische Spannungen zwischen unterschiedlichen Bauteilen eines Gehäuses und einer Kühlmittelplatte nochmals minimiert. Vorzugsweise ist das Gussteil aus einem metallischen Material, vorzugsweise aus Aluminium gefertigt. Insgesamt werden gemäß dem Konzept der Erfindung zusätzliche Kühlmittelleitungen vermieden und eine Strömungslänge eines Kühlmittelstroms vergleichsweise kurz gehalten. Abdichtungsstellen und für die Abdichtungsstellen notwendige Dichtungstechniken können reduziert bzw. entsprechend einfach gewählt werden. Insbesondere im Rahmen der zweiten Variante der Erfindung werden derartige Vorteile optimiert und darüber hinaus Temperaturspannungen mit einem ersten und zweiten Wärmetauscher sowie gegebenenfalls einem dritten Wärmetauscher vergleichsweise gering gehalten.

Die Erfindung führt ferner auf ein System zur Ladeluftkühlung und/oder Turboaufladung eines Verbrennungsmotors eines Kraftfahrzeugs mit einer Vorrichtung gemäß dem Konzept der Erfindung oder einer Weiterbildung davon. Das System weist eine erste Verdichterstufe eines Turboladers zur Verdichtung von Ladeluft sowie eine zweite Verdichterstufe eines Turboladers zur weiteren Verdichtung der Ladeluft auf, wobei der erste Wärmetauscher, insbesondere der Hochdruckladeluftkühler, abströmseitig der zweiten Verdichterstufe angeordnet ist und der zweite Wärmetauscher, insbesondere der Niederdruckladeluftkühler, abströmseitig der ersten Verdichterstufe und/oder zuströmseitig der zweiten Verdichterstufe angeordnet ist. Unter "Turbolader" ist zu verstehen, dass eine Verdichterstufe, insbesondere ein Kompressor, mit einer Turbine mittels insbesondere einer Welle gekoppelt ist. Die Turbine wird dabei von Abgas eines Verbrennungsmotors angetrieben und treibt durch die Koppelung den Kompressor an. Der Kompressor, insbesondere die Verdichterstufe, verdichtet Ladeluft von einem geringeren Druckniveau auf ein höheres Druckniveau.

Gemäß einer vorteilhaften Weiterbildung der Erfindung ist der zweite Wärmetauscher in zumindest eine Verdichterstufe integriert.

Unter "in zumindest eine Verdichterstufe integriert" ist dabei insbesondere zu verstehen, dass der zweite Wärmetauscher, insbesondere der Niederdruckladeluftwärmetauscher in dem Kompressorgehäuse der ersten Verdichterstufe und/oder in dem Gehäuse der zweiten Verdichterstufe angeordnet ist. Auf diese Weise kann Bauraum besonders vorteilhaft eingespart werden.

Erfindungsgemäß ist ferner ein Verfahren zur Ladeluftkühlung für einen Verbrennungsmotor eines Kraftfahrzeugs vorgesehen, das folgende Verfahrensschritte aufweist:
Kühlmittel strömt in eine Kühlmittelzuleitung eines Verbindungsmittels, insbesondere der ersten Verbindungsplatte oder der Gehäusewand, einer Vorrichtung gemäß dem Konzept der Erfindung oder einer Weiterbildung davon.

Das in der Kühlmittelzuleitung strömende Kühlmittel wird in einem ersten Kühlmittelteilstrom in einen zweiten Kühlmittelteilstrom aufgeteilt.

Das Kühlmittel des ersten Kühlmittelteilstroms strömt im Wesentlichen direkt aus dem Verbindungsmittel, insbesondere der ersten Verbindungsplatte oder der Gehäusewand, in einen ersten Wärmetauscher, insbesondere zur Hochdruckladeluftkühlung.

Das Kühlmittel des zweiten Kühlmittelteilstroms strömt im Wesentlichen direkt aus dem Verbindungsmittel, insbesondere der ersten Verbindungsplatte, oder der Gehäusewand, in einem zweiten Wärmetauscher, insbesondere zur Niederdruckladeluftkühlung.

In einer vorteilhaften Weiterbildung der Erfindung durchströmt das Kühlmittel des zweiten Kühlmittelteilstroms den zweiten Wärmetauscher, insbesondere den Niederdruckladeluftwärmetauscher. Dabei kühlt das Kühlmittel Ladeluft, die in einer ersten Verdichterstufe eines ersten Turboladers vorverdichtet wurde. Das Mittel des ersten Kühlmittelteilstroms durchströmt den ersten Wärmetauscher und kühlt dabei Ladeluft, die in einer zweiten Verdichterstufe eines zweiten Turboladers weiterverdichtet wurde.

In einer vorteilhaften Weiterbildung der Erfindung ist ferner vorgesehen, dass nach dem Durchströmen des ersten Wärmetauschers das Kühlmittel des ersten Kühlmittelteilstroms im Wesentlichen direkt von dem ersten Wärmetauscher, insbesondere dem Ladelufthochdruckkühler, das Verbindungsmittel, insbesondere die erste Verbindungsplatte oder die Gehäusewand, strömt und/oder nach dem Durchströmen des zweiten Wärmetauschers, insbesondere des Niederdruckladeluftkühlers, direkt von dem zweiten Wärmetauscher in das Verbindungsmittel, insbesondere die erste Verbindungsplatte oder die Gehäusewand strömt.

Weitere vorteilhafte Ausgestaltungen der Erfindungen ergeben sich aus den Unteransprüchen und aus der Zeichnung. Die Gegenstände der Unteransprüche beziehen sich sowohl auf die erfindungsgemäße Vorrichtung zur Ladeluftkühlung für einen Verbrennungsmotor eines Kraftfahrzeugs als auch auf das erfindungsgemäße System zur Ladeluftkühlung und/oder Turboaufladung eines Verbrennungsmotors eines Kraftfahrzeugs sowie auf das Verfahren zur Ladeluftkühlung für einen Verbrennungsmotor eines Kraftfahrzeugs.

Ausführungsbeispiele der Erfindung sind in der Zeichnung dargestellt und werden im Folgenden näher erläutert, wobei eine Beschränkung der Erfindung hierdurch nicht erfolgen soll. Es zeigen:
- Fig. 1:: eine Vorderansicht der ersten Verbindungsplatte als eine Ausführungsform gemäß der ersten Variante;
- Fig. 2:: eine Rückansicht der ersten Verbindungsplatte;
- Fig. 3:: eine Schnittdarstellung A-A der ersten Verbindungsplatte;
- Fig. 4:: eine isometrische Darstellung der ersten Verbindungsplatte und der zweiten Verbindungsplatte;
- Fig. 5:: eine isometrische Darstellung der Vorrichtung zur Ladeluftkühlung und zur Abgaskühlung;
- Fig. 6:: eine Vorderansicht eines Systems zur Ladeluftkühlung und/oder zur Turboaufladung;
- Fig. 7:: eine perspektivische Ansicht eines Gehäuses eines Abgaskühlers als eine Ausführungsform gemäß der zweiten Variante;
- Fig. 8:: eine isometrische Teilschnittdarstellung von Fig. 8;
- Fig. 9:: eine Schnittdarstellung von Fig. 8.

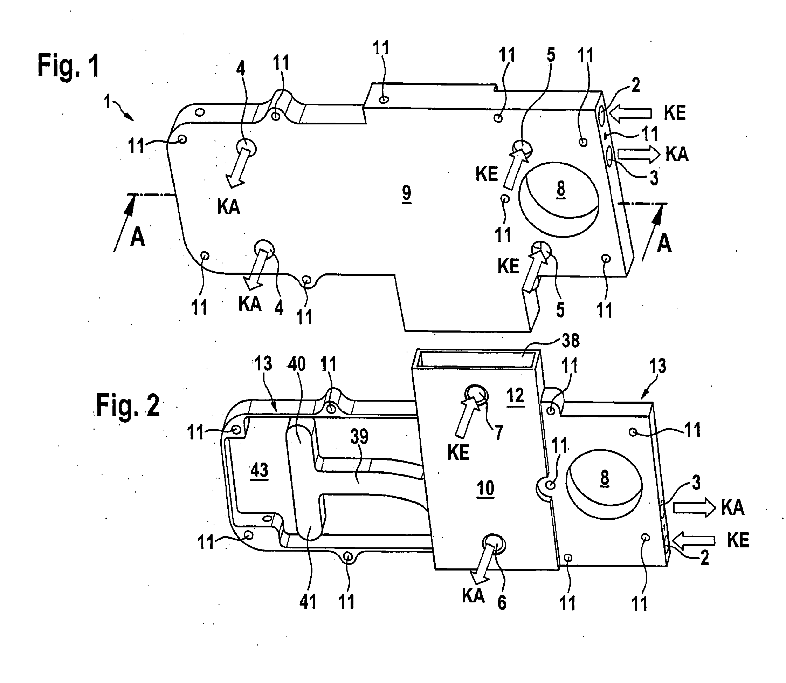

Fig. 1 bis Fig. 6 zeigen eine besonders bevorzugte Ausführungsform gemäß der ersten Variante der Erfindung.

Fig. 1 zeigt eine Vorderansicht der ersten Verbindungsplatte 1.

Die erste Verbindungsplatte 1 ist im Wesentlichen rechteckförmig ausgebildet. Die Verbindungsplatte weist eine erste Flanschfläche 9 und eine zweite Flanschfläche 10 auf. Aus der Verbindungsplatte 1 ist zumindest ein quaderförmiger Vorsprung aus einer nicht näher bezeichneten Seitenfläche der Platte ausgebildet. Auf der Seite, die der Seite mit der quaderförmigen Ausprägung gegenüberliegt, weist die Verbindungsplatte eine Stufe auf.

Ferner sind aus den nicht näher bezeichneten Seitenflächen der Verbindungsplatte zungenförmige Vorsprünge ausgebildet, die beispielsweise Befestigungsöffnungen 11, insbesondere Befestigungsbohrungen, eingebracht sind. Die Verbindungsplatte kann abgerundete Ecken und/oder kantige Ecken aufweisen. Auf den nicht näher bezeichneten Randflächen, die im Wesentlichen senkrecht zur ersten Flanschfläche 9 und/oder zur zweiten Flanschfläche 10 ausgebildet sein können, sind Befestigungsöffnungen 11 eingebracht. Ferner weist eine nicht näher bezeichnete Seitenfläche, die insbesondere senkrecht zur ersten Flanschfläche 9 und/oder zur zweiten Flanschfläche 10 ausgebildet ist, zumindest eine erste Eintrittsöffnung 2 zum Eintritt von Kühlmittel in die erste Verbindungsplatte 1 auf. Ebenso ist an dieser Seitenfläche eine erste Austrittsöffnung 3 zum Austritt von Kühlmittel aus der ersten Verbindungsplatte 1 vorgesehen. Die erste Eintrittsöffnung 2 und die erste Austrittsöffnung 3 sind im dargestellten Ausführungsbeispiel an derselben Seitenfläche der Verbindungsplatte 1 angeordnet.

In einem anderen Ausführungsbeispiel können die erste Eintrittsöffnung 2 und die erste Austrittsöffnung 3 an verschiedenen Seitenflächen der ersten Verbindungsplatte 1 angeordnet sein. Ebenso kann die erste Verbindungsplatte mehr als eine Eintrittsöffnung und/oder mehr als eine Austrittsöffnung 3 aufweisen.

Die erste Flanschfläche 9 weist im dargestellten Ausführungsbeispiel zumindest eine, insbesondere zwei zweite, Austrittsöffnungen zum Austritt von Kühlmittel auf. Ferner weist die erste Verbindungsplatte 1 zumindest eine zweite Eintrittsöffnung 5, insbesondere zumindest zwei zweite Eintrittsöffnungen 5, auf.

Über die Eintrittsöffnung 5 tritt Kühlmittel in die erste Verbindungsplatte ein. Im dargestellten Ausführungsbeispiel liegen die zwei zweiten Austrittsöffnungen 4 und/oder die zwei zweiten Eintrittsöffnungen 5 jeweils auf einer Geraden, die im Wesentlichen parallel zu der nicht näher bezeichneten Seitenfläche verläuft, in der die erste Eintrittsöffnung 2 und die erste Austrittsöffnung 3 eingebracht sind.

Die zwei zweiten Austrittsöffnungen 4 und die zwei zweiten Eintrittsöffnungen 5 bilden im dargestellten Ausführungsbeispiel die Ecken eines Rechtecks.

In einem anderen nicht dargestellten Ausführungsbeispiel sind die zweiten Austrittsöffnungen 4 und die zweiten Eintrittsöffnungen 5 an einer anderen Stelle der ersten Flanschfläche 9 eingebracht. Die zweiten Eintrittsöffnungen 5 und/oder die zumindest zwei zweiten Austrittsöffnungen 4 sind im Wesentlichen kreisförmig ausgebildet. In einem anderen Ausführungsbeispiel sind die genannten Öffnungen ellipsenförmig oder weisen eine andere beliebige Form auf. Die Verbindungsplatte 1 weist eine Durchgangsöffnung 8, die im Wesentlichen zylinderförmig ausgebildet ist, auf. Die Durchgangsöffnung 8 erstreckt sich im Wesentlichen senkrecht zur ersten Flanschfläche 9 und/oder zur zweiten Flanschfläche 10. Die Durchtrittsöffnung 8 ist zylinderförmig, kann aber auch eine andere nicht kreisförmige Querschnittsfläche aufweisen bzw. kegelstumpfelementförmig ausgebildet sein.

Die Durchgangsöffnung 8 ist zumindest bereichsweise zwischen den zwei zweiten Eintrittsöffnungen 5 angeordnet. Die Durchgangsöffnung 8 weist einen nicht näher bezeichneten Mittelpunkt auf, der von den beiden Mittelpunkten der zweiten Eintrittsöffnungen 5 den gleichen Abstand aufweist.

In der vorliegenden Ausführungsform weist die Durchgangsöffnung 8 einen nicht näher bezeichneten Mittelpunkt auf, der von den beiden Mittelpunkten der zweiten Austrittsöffnungen 4 im Wesentlichen denselben Abstand aufweist. Die zwei zweiten Austrittsöffnungen 4, die zwei zweiten Eintrittsöffnungen 5 und die vier Befestigungsöffnungen 11 der ersten Flanschfläche 9 sind im Wesentlichen so angeordnet, dass sie im Wesentlichen achssymmetrisch sind zu einer nicht dargestellten Geraden, die durch den Mittelpunkt der Durchgangsöffnung 8 und durch den Mittelpunkt einer Befestigungsöffnung 11 verläuft.

Die erste Eintrittsöffnung zwei und die erste Austrittsöffnung 3 sind im Wesentlichen kreisförmig ausgebildet.

Die erste Verbindungsplatte 1 ist aus einem Material wie beispielsweise Metall, insbesondere Aluminium, Stahl oder Edelstahl oder aus einem Kunststoff oder aus Keramik oder aus einem Faserverbundwerkstoff ausgebildet.

Die Kontur der ersten Verbindungsplatte 1 ist mittels eines urformenden Fertigungsverfahrens, wie beispielsweise Gießen, oder mittels eines abtragenden und/oder trennenden Fertigungsverfahrens, wie beispielsweise Fräsen, Bohren, Laserschneiden usw., hergestellt.

Die erste Eintrittsöffnung 2, die erste Austrittsöffnung 3, die zweiten Austrittsöffnungen 4 und/oder die zweiten Eintrittsöffnungen 5 sowie die Befestigungsöffnungen 11 bzw. die Durchgangsöffnung 8 sind mittels eines abtragenden Fertigungsverfahrens wie beispielsweise Bohren und/oder Reiben und/oder Laserschneiden in die erste Verbindungsplatte 1 eingebracht. Die erste Flanschfläche 9 dient zum Anflanschen des ersten Wärmetauschers. Der erste Wärmetauscher ist insbesondere ein Ladeluftkühler wie beispielsweise ein Ladelufthochdruckkühler. In einem anderen nicht dargestellten Ausführungsbeispiel ist der anzuflanschende erste Wärmetauscher ein Abgaskühler und/oder ein Kühlmittelkühler und/oder ein Ölkühler.

Fig. 2 zeigt eine Rückansicht der ersten Verbindungsplatte 1. Gleiche Merkmale sind mit den gleichen Bezugszeichen versehen wie in Figur 1.

Die erste Verbindungsplatte 1 wird im Wesentlichen aus einem ersten im Wesentlichen quaderförmigen Teilelement 12 und einem zweiten im Wesentlichen quaderförmigen Teilelement 13 gebildet. Die beiden im Wesentlichen quaderförmigen Teilelemente 12 und 13 sind derart zueinander angeordnet, dass zumindest eine längere Seite des ersten quaderförmigen Teilelements im Wesentlichen senkrecht zu einer längeren Seite des zweiten quaderförmigen Teilelements 13 angeordnet ist. Das erste quaderförmige Teilelement 12 und das zweite quaderförmige Teilelement 13 sind einteilig ausgebildet und bilden die erste Verbindungsplatte 1. Das zweite quaderförmige Teilelement 13 weist die zweite Flanschfläche 10 zum Anflanschen eines zweiten Wärmetauschers auf. Der zweite Wärmetauscher ist ein Ladeluftniederdruckkühler, insbesondere Zwischenkühler oder ein Abgaskühler oder ein Ölkühler oder ein Kühlmittelkühler.

Das zweite quaderförmige Teilelement 13 weist einen ersten Hohlraum 38 auf, der im Wesentlichen ebenfalls quaderförmig ausgebildet ist. Die zweite Flanschfläche 10 weist zumindest eine dritte Eintrittsöffnung 7 und zumindest eine dritte Austrittsöffnung 6 auf. Die dritte Austrittsöffnung 6 und/oder die dritte Eintrittsöffnung 7 kommunizieren mit dem ersten Hohlraum 38. Die dritte Austrittsöffnung 6 und/oder die dritte Eintrittsöffnung weisen eine kreisförmige Querschnittsfläche auf. Sie können aber auch eine zylinderförmige Querschnittsfläche oder eine Querschnittsfläche mit einem rechteckigen oder anderen eckigen Formen aufweisen. Die dritte Austrittsöffnung 6 und die dritte Eintrittsöffnung 7 sind vorliegend im Wesentlichen symmetrisch auf der zweiten Flanschfläche 10 angeordnet. Die dritte Austrittsöffnung 6 und die dritte Eintrittsöffnung 7 sind vorliegend im Wesentlichen auf einer Geraden angeordnet, die die Flächenhalbierende der zweiten Flanschfläche 10 bildet. Im dargestellten Ausführungsbeispiel sind die dritte Austrittsöffnung 6 und die dritte Eintrittsöffnung 7 als Stufenbohrungen ausgebildet. Die dritte Austrittsöffnung 6 und die dritte Eintrittsöffnung 7 sind mittels eines abtragenden Fertigungsverfahrens wie beispielsweise Bohren und/oder Senken in das zweite quaderförmige Teilelement 13 eingebracht. In einer abgewandelten Ausführungsform könnte eine Anordnung der Öffnungen, insbesondere Durchgangsöffnungen und Austrittsöffnungen, auch asymmetrisch zueinander und mit je nach Zweck angepassten Abständen zueinander und/oder entlang geeigneter ggfs. nichtgeradliniger Linien erfolgen.

In der vorliegenden Ausführungsform hat das erste quaderförmige Teilelement 12 eine größere Dicke als das zweite quaderförmige Teilelement 13. Somit steht vorliegend das erste quaderförmige Teilelement 12 mit einem nicht näher bezeichneten dicken Bereich über das zweite quaderförmige Teilelement 13 hervor. Das zweite quaderförmige Teilelement 13 weist ferner einen zweiten Hohlraum 43 auf. Der zweite Hohlraum 43 weist eine nicht näher bezeichnete Grundfläche aus Rechteckelementen teilweise mit abgerundeten Ecken auf. Eine nicht näher bezeichnete im Wesentlichen umlaufende rechteckförmige Seitenfläche umschließt den zweiten Hohlraum 43 und ist im Wesentlichen senkrecht zur nicht näher bezeichneten Grundfläche ausgebildet. In dem zweiten Hohlraum 43 ist ein erstes Stegelement 39 angeordnet, wobei das Stegelement 39 im Wesentlichen eine rechteckförmige, insbesondere quaderförmige Querschnittsfläche aufweist. Das erste Stegelement 39 verzweigt sich in ein erstes Stegteilelement 40 und ein zweites Stegteilelement 41. Das erste Stegteilelement 40 und/oder das zweite Stegteilelement 41 sind zumindest bereichsweise mit abgerundeten Ecken ausgebildet. Das erste Stegteilelement 40 und das zweite Stegteilelement 41 sind im Wesentlichen einteilig ausgebildet und haben zusammen im Wesentlichen die Form einer mit Material ausgefüllten Langlochnut. In einer abgewandelten Ausführungsform könnte eine Platte auch eben sein. Eine Leitungsführung könnte dann zwecks Über- und Unterführung der einzelnen Strömungskanäle in angepasster Weise anders ausgeführt werden.

Das erste Stegteilelement 40 und/oder das zweite Stegteilelement 41 sind im Wesentlichen senkrecht zum ersten Stegelement 39 ausgebildet. Somit bilden das erste Stegelement 39, das erste Stegteilelement 40 und das zweite Stegteilelement 41 im Wesentlichen ein T. Die nicht näher bezeichnete Höhe des ersten Stegelements 39 und/oder des ersten Stegteilelements 40 und/oder des zweiten Stegteilelements 41 entspricht im Wesentlichen der Höhe der Rechteckfläche, die den zweiten Hohlraum 43 umgibt. Der zweite Hohlraum 43 wird im Wesentlichen von einem bandenförmigen Element umgeben. Aus dem bandenförmigen Element sind zwei zungenförmige Teilelemente ausgebildet, in welche zumindest eine Befestigungsöffnung 11 jeweils eingebracht ist. Die zumindest eine Befestigungsöffnung 11, insbesondere die Befestigungsöffnungen 11 dienen zur Befestigung der ersten Verbindungsplatte an zumindest einem ersten Wärmetauscher und/oder an einem zumindest zweiten Wärmetauscher. Das erste quaderförmige Teilelement 12, insbesondere die zweite Flanschfläche 10 weist im Bereich einer Befestigungsöffnung 11 eine halbzylinderförmige Aussparung auf.

Die dritte Austrittsöffnung 6 dient zum Austritt von Kühlmittel KA. Die dritte Eintrittsöffnung 7 dient zum Eintritt von Kühlmittel KE.

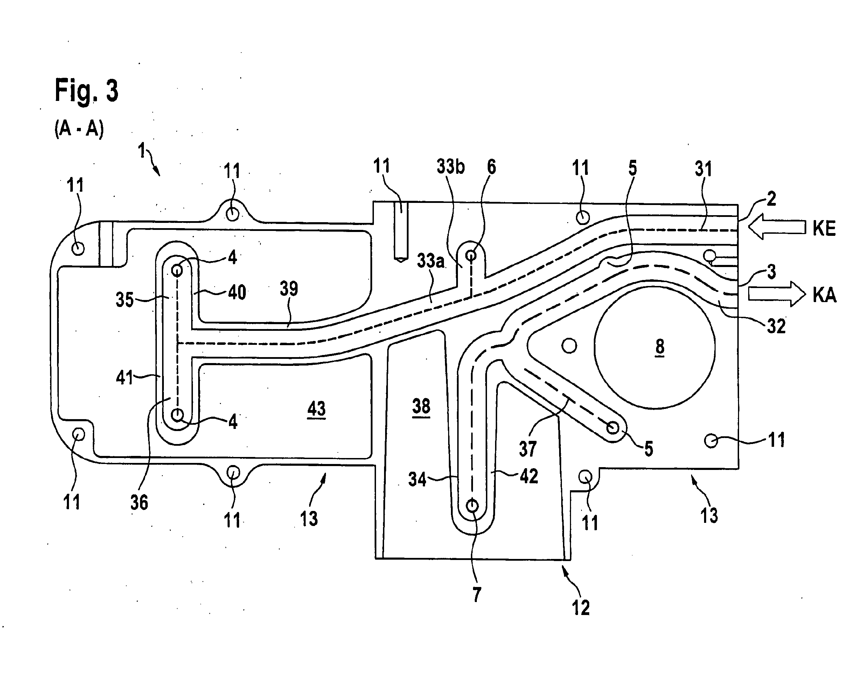

Fig. 3 zeigt eine Schnittdarstellung A-A der ersten Verbindungsplatte 1. Gleiche Merkmale sind mit den gleichen Bezugszeichen versehen wie in den vorherigen Figuren.

Die erste Verbindungsplatte 1 weist eine erste Kühlmittelzuleitung 31 auf, die über die erste Eintrittsöffnung 2 mit Kühlmittel über den Kühlmitteleintritt KE beströmbar ist. Die Kühlmittelzuleitung 31 verzweigt sich in einen ersten Zuströmteilkanal 33a zur Beströmung des ersten Wärmetauschers, insbesondere des Ladeluftkühlers wie beispielsweise des Ladelufthochdruckkühlers, und in einen zweiten Zuströmteilkanal 33b zur Beströmung des zweiten Wärmetauschers, insbesondere des Niederdruckladeluftkühlers wie beispielsweise des Zwischenkühlers, mit Kühlmittel. Der erste Zuströmkanal 33a verzweigt sich in einen dritten Zuströmteilkanal 35 und in einen vierten Zuströmteilkanal 36. Der erste Zuströmteilkanal 33a ist zumindest abschnittsweise in dem ersten Stegelement 39 ausgebildet. Der dritte Zuströmteilkanal 35 ist in dem ersten Stegteilelement 40 ausgebildet. Der vierte Zuströmteilkanal 36 ist in dem zweiten Stegteilelement 41 ausgebildet. Die Kühlmittelzuleitung 31, der erste Zuströmteilkanal 33a, der zweite Zuströmteilkanal 33b, der dritte Zuströmteilkanal 35 und der vierte Zuströmteilkanal 36 weisen im Wesentlichen eine kreisförmige Querschnittsfläche auf. In einem anderen Ausführungsbeispiel weisen die zuvor genannten Leitungen bzw. Kanäle eine im Wesentlichen eckige, quaderförmige, rechteckförmige, ellipsenförmige oder eine Querschnittsfläche aus den zuvor genannten Formen auf.

Die erste Verbindungsplatte 1 weist ferner einen ersten Abströmteilkanal 37 zur Ableitung von Kühlmittel aus dem ersten Wärmetauscher, insbesondere Hochdruckladeluftkühler und zumindest einen zweiten Abströmteilkanal 34 zur Ableitung von Kühlmittel aus dem zweiten Wärmetauscher auf. Der erste Abströmteilkanal 37 und der zweite Abströmteilkanal 34 münden insbesondere in die Kühlmittelableitung 32. Der zweite Abströmteilkanal ist zumindest abschnittsweise in einem zweiten Stegelement 42 des ersten quaderförmigen Teilelements 12 der Verbindungsplatte 1 angeordnet. Der erste Abströmteilkanal 37, der zweite Abströmteilkanal 34 und die Kühlmittelableitung 32 weisen im Wesentlichen einen kreisrunden Querschnitt auf. In einem anderen Ausführungsbeispiel weisen die zuvor genannten Leitungen bzw. Kanäle eine rechteckförmige, quaderförmige, ellipsenförmige Querschnittsform oder eine Querschnittsfläche mit einer Kombination der zuvor genannten Formen auf.

Die erste Kühlmittelzuleitung 31 und/oder die erste Kühlmittelableitung 32 und/oder der erste Zuströmteilkanal 33a und/oder der zweite Zuströmteilkanal 33b und/oder der dritte Zuströmteilkanal 35 und/oder der vierte Zuströmteilkanal 36 und/oder der zweite Abströmkanal 34 und/oder der erste Abströmteilkanal 37 werden vorliegend mittels eines urformenden Fertigungsverfahren wie beispielsweise Gießen, insbesondere Gießen mit verlorenen Kernen, in die erste Verbindungsplatte eingebracht. In einer abgewandelten Ausführungsform können Leitungen und Kanäle auch durch Bohren, zusätzlich oder alternativ, eingebracht werden.

Der zweite Zuströmteilkanal 33b und/oder der zweite Abströmteilkanal 34 und/oder der dritte Zuströmteilkanal 35 und/oder der vierte Zuströmteilkanal 36 sind im Wesentlichen parallel zueinander angeordnet.

Der dritte Zuströmteilkanal 35 und der vierte Zuströmteilkanal 36 sind im Wesentlichen auf einer Geraden angeordnet. Der zweite Zuströmteilkanal 33b und der zweite Abströmteilkanal 34 sind im Wesentlichen auf einer Geraden zueinander angeordnet. Die Kühlmittelzuleitung 31 und die Kühlmittelableitung 32 verlaufen zumindest abschnittsweise parallel zueinander. Der zweite Abströmungsteilkanal 34 und der erste Abströmteilkanal 37 weisen im Wesentlichen einen nicht näher bezeichneten Winkel auf, der Werte zwischen 0° und 90°, insbesondere zwischen 10° und 70°, insbesondere zwischen 20° und 45° aufweist. Die Kühlmittelableitung 32 folgt zumindest bereichsweise einem Umfangsabschnitt der Durchgangsöffnung 8. Das zweite Stegelement 42 ist in dem ersten Hohlraum 38 ausgebildet. Das zweite Stegelement 42 ist im Wesentlichen auf der Seitenhalbierenden der Querschnittsfläche des ersten quaderförmigen Teilelements 12 angeordnet.

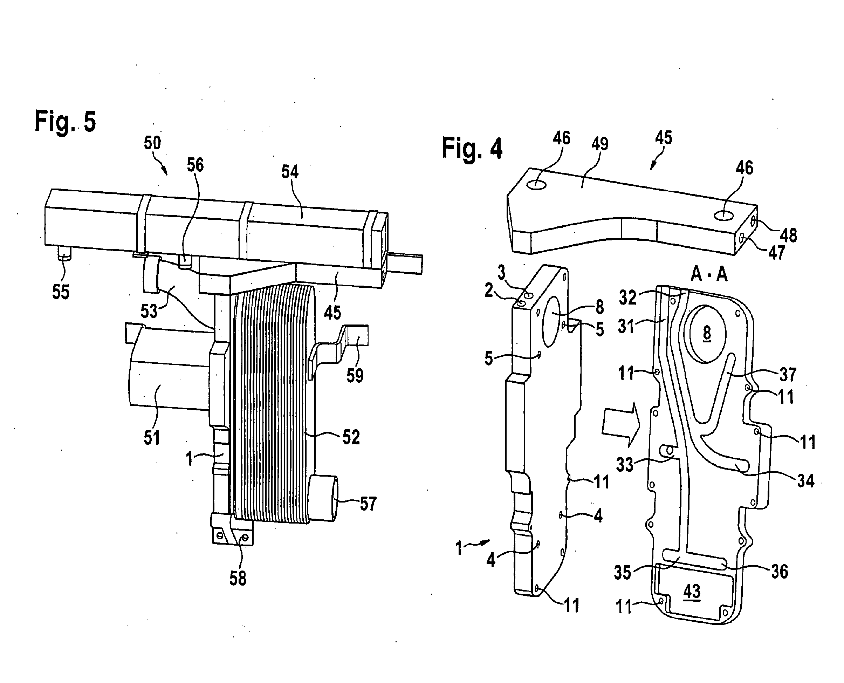

Fig. 4 zeigt eine isometrische Darstellung der ersten Verbindungsplatte 1 und einer zweiten Verbindungsplatte 45. Gleiche Merkmale sind mit den gleichen Bezugszeichen versehen wie in den vorherigen Figuren.

Das zweite Befestigungsteilelement 45 ist als zweites Befestigungsteilelement 45, insbesondere als Befestigungsplatte 45 ausgebildet. Die Befestigungsplatte 45 ist im Wesentlichen als Platte ausgebildet, aus der beispielsweise zumindest ein dreieckförmiges Plattenelement ausgebildet ist. In einem anderen nicht dargestellten Ausführungsbeispiel kann aus der Befestigungsplatte 45 zumindest ein dreieckförmiges und/oder zungenförmiges Teilelement ausgebildet sein. Das Befestigungsteilelement 45 ist aus Metall wie beispielsweise Aluminium, Stahl oder Edelstahl, und/oder aus Kunststoff oder beispielsweise aus Keramik oder aus einem Faserverbundwerkstoff ausgebildet.

Die Befestigungsplatte 45 weist zwei Befestigungsbohrungen 46 beispielsweise zur Befestigung eines dritten Wärmetauschers wie beispielsweise eines Abgaskühlers und/oder eines weiteren Ladeluftkühlers und/oder eines Ölkühlers auf. Ferner weist die Befestigungsplatte 45 eine vierte Eintrittsöffnung 47 zum Eintritt von Kühlmittel in die Befestigungsplatte 45 auf. Ferner weist die Befestigungsplatte 45 zumindest eine vierte Austrittsöffnung 48 zum Austritt von Kühlmittel aus der Befestigungsplatte, insbesondere der zweiten Befestigungsplatte 45, auf. Ferner sind in der zweiten Befestigungsplatte 45 zumindest abschnittsweise die erste Kühlmittelzuleitung 31 und/oder die erste Kühlmittelableitung 32 angeordnet bzw. ausgebildet. Die erste Befestigungsplatte 1 und die zweite Befestigungsplatte 45 sind beispielsweise dicht miteinander verbunden, so dass der Leitungsabschnitt der Kühlmittelzuleitung 31, der in dem zweiten Befestigungselement ausgebildet ist, mit dem Leitungsabschnitt der ersten Kühlmittelzuleitung 31 kommunizieren kann, die in der ersten Verbindungsplatte 1 angeordnet ist, ohne dass es zu Undichtigkeiten kommt. Ferner kann der Leitungsabschnitt der ersten Kühlmittelableitung 32, der in der zweiten Befestigungsplatte 45 angeordnet ist, insbesondere über die erste Austrittsöffnung 3 mit dem Leitungsabschnitt der ersten Kühlmittelableitung 32 kommunizieren, der in der ersten Befestigungsplatte 1 angeordnet ist. In einer Weiterbildung der Erfindung sind die erste Befestigungsplatte 1 und die zweite Befestigungsplatte 45 einteilig ausgebildet bzw. stoffschlüssig und/oder kraftschlüssig und/oder formschlüssig miteinander verbunden, insbesondere dicht miteinander verbunden. Der in der zweiten Befestigungsplatte 45 angeordnete Leitungsbereich der Kühlmittelzuleitung 31 und der Kühlmittelableitung 32 sind vorliegend beispielsweise mittels eines urformenden Fertigungsverfahrens wie Gießen, insbesondere Gießen mit verlorenen Kernen, in die zweite Befestigungsplatte eingebracht. In einer abgewandelten Ausführungsform können Leitungen und Kanäle auch durch Bohren, zusätzlich oder alternativ, eingebracht werden. Die erste Verbindungsplatte 1 und die zweite Verbindungsplatte 45 sind im Wesentlichen senkrecht zueinander angeordnet. Insbesondere weist die zweite Verbindungs- bzw. Befestigungsplatte 45 eine Flanschfläche 49 auf zum Anflanschen zumindest eines dritten Wärmetauschers wie beispielsweise eines Abgaskühlers und/oder eines weiteren Ladeluftkühlers und/oder eines Ölkühlers. Die zweite Befestigungs- bzw. Verbindungsplatte 45 und die erste Verbindungsplatte 1 sind im Wesentlichen derart zueinander angeordnet, dass die Flächen normal, der dritten Flanschfläche 49 im Wesentlichen rechtwinklig zur Flächennormalen der ersten Flanschfläche 9 und/oder zur zweiten Flanschfläche 10 angeordnet ist. Insbesondere sind die erste Verbindungsplatte 1 und die zweite Verbindungsplatte 5 derart zueinander angeordnet, dass die erste Eintrittsöffnung 2 der ersten Verbindungsplatte mit einer entsprechenden Öffnung der zweiten Verbindungsplatte 45 im Wesentlichen konzentrisch bzw. koaxial angeordnet ist. Ebenso ist die erste Austrittsöffnung 3 der ersten Verbindungsplatte zur entsprechenden Öffnung der zweiten Verbindungsplatte 45 konzentrisch bzw. im Wesentlichen koaxial angeordnet.

Fig. 5 zeigt eine isometrische Darstellung der Vorrichtung zur Ladeluftkühlung und zur Abgaskühlung. Gleiche Merkmale sind mit den gleichen Bezugszeichen versehen wie in den vorherigen Figuren.

Das Kühlmodul 50 weist einen ersten Wärmetauscher 52, insbesondere einen Ladeluftkühler wie beispielsweise einen Hochdruckladeluftkühler auf. Ferner weist das Kühlmodul 50 einen zweiten Wärmetauscher 51, insbesondere einen Ladeluftkühler wie beispielsweise einen Niederdruckladeluftkühler auf. Darüber hinaus weist das Kühlmodul 50 zumindest einen dritten Wärmetauscher 54, insbesondere einen Abgaswärmetauscher auf. In einem anderen Ausführungsbeispiel können der erste Wärmetauscher 52, der zweite Wärmetauscher 51 und der zumindest eine dritte Wärmetauscher 54 ein Ladeluftkühler und/oder ein Abgaskühler und/oder ein Ölkühler und/oder ein Kühlmittelkühler zur Motorkühlung sein.

Der Hochdruckladeluftkühler 52 weist eine nicht näher bezeichnete Grundplatte auf, auf welche nicht näher bezeichnete Scheiben derart gestapelt sind, dass zwischen benachbarten Scheiben Strömungskanäle für Ladeluft und/oder Kühlmittel ausgebildet sind. Die übereinander gestapelten Scheiben sind im Wesentlichen derart ausgebildet, dass sich an einem im Wesentlichen rechteckigen Bereich jeweils halbkreisfömnige Bereiche anschließen. Mit einer nicht näher bezeichneten Grundplatte ist der Hochdruckladeluftkühler 52 mit Befestigungselementen wie Schrauben, Muttern usw. an dem ersten Befestigungselement bzw. der ersten Befestigungsplatte befestigt bzw. an die erste Flanschfläche 9 angeflanscht. Der Ladelufteintrittsstutzen 53 des Hochdruckladeluftkühlers 52 ist direkt an die erste Befestigungsplatte angeflanscht bzw. angeschlossen. In einem anderen Ausführungsbeispiel tritt der Ladelufteintrittsstutzen 53 durch die Durchtrittsöffnung 8 und ist an die nicht näher bezeichnete Grundplatte des Hochdruckladeluftkühlers 52 angeflanscht bzw. mit dieser Grundplatte verbunden, insbesondere stoff- und/oder formschlüssig verbunden. In einem anderen Ausführungsbeispiel ist der Ladelufteintrittsstutzen 53 mit dem ersten Verbindungselement 1 verbunden. Über den Ladelufteintrittsstutzen strömt ungekühlte Ladeluft in den Hochdruckladeluftkühler 52. Mittels des Ladeluftaustrittsstutzens 57 strömt die im Hochdruckladeluftkühler 52 abgekühlte Ladeluft aus dem Hochdruckladeluftkühler heraus. Im Wesentlichen gegenüberliegend, insbesondere auf der gegenüberliegenden Seite der ersten Verbindungsplatte 1, ist der Niederdruckladeluftkühler 51 angeordnet und an die zweite Flanschfläche 10 angeflanscht. Der Niederdruckladeluftkühler 51 ist zumindest bereichsweise mit der ersten Verbindungsplatte formschlüssig und/oder stoffschlüssig und/oder kraftschlüssig verbunden. Insbesondere ist der Niederdruckladeluftkühler 51 mittels Verbindungselementen wie Schrauben, Muttern usw. mit dem ersten Verbindungselement 1 verbunden.

In einer anderen Ausführungsform ist der Hochdruckladeluftkühler 52 als Wärmeübertrager mit Rohrbündeln ausgebildet. Die Rohre sind insbesondere als Flachrohre ausgebildet. Sie werden in zumindest einem Rohrboden, insbesondere in zwei Rohrböden aufgenommen. In die Rohre können turbulenzerzeugende Elemente wie Winglets, Wellrippen oder Turbulenzeinlagen eingelegt und/oder eingeprägt sein.

Der Niederdruckladeluftkühler 51 weist Rohre, insbesondere Flachrohre auf. In einem anderen Ausführungsbeispiel ist der Niederdruckladeluftkühler 51 ähnlich wie der Hochdruckladeluftkühler 52 aus übereinander gestapelten Platten ausgebildet, welche Strömungskanäle für Kühlmittel, insbesondere Kühlwasser, und Ladeluftkanäle bilden.

In einer anderen Ausführungsform ist der Niederdruckluftkühler 51 als Wärmeübertrager mit Rohrbündeln ausgebildet. Die Rohre sind insbesondere als Flachrohre ausgebildet. Sie werden in zumindest einem Rohrboden, insbesondere in zwei Rohrböden aufgenommen. In die Rohre können turbulenzerzeugende Elemente wie Winglets, Wellrippen oder Turbulenzeinlagen eingelegt und/oder eingeprägt sein.

Auf dem zweiten Verbindungs- bzw. Befestigungselement 45 ist der Abgaswärmetauscher 54 über Befestigungselemente befestigt. Der Abgaswärmetauscher 54 weist einen Kühlmitteleintrittsstutzen 55 zum Eintritt von Kühlmittel in den Abgaswärmetauscher und einen Kühlmittelaustritt 56 zum Austritt von Kühlmittel aus dem Abgaswärmetauscher auf. Der Abgaswärmetauscher 54 weist einen Gehäusemantel auf, in dem insbesondere rechteckförmige Rohre angeordnet sind. In einem anderen Ausführungsbeispiel ist der Abgaswärmetauscher 54 ähnlich wie der Hochdruckladeluftkühler 52 aus übereinander gestapelten Scheiben ausgebildet. Diese übereinander gestapelten Scheiben bilden Strömungskanäle für zu kühlendes Abgas und für Kühlmittel wie beispielsweise wasserhaltige Kühlflüssigkeit. Mittels eines ersten Motorbefestigungselements 58 und/oder eines zweiten Motorbefestigungselements 59 ist das Kühlmodul 50 an einem nicht dargestellten Motor, insbesondere Verbrennungsmotor für ein Kraftfahrzeug befestigt.

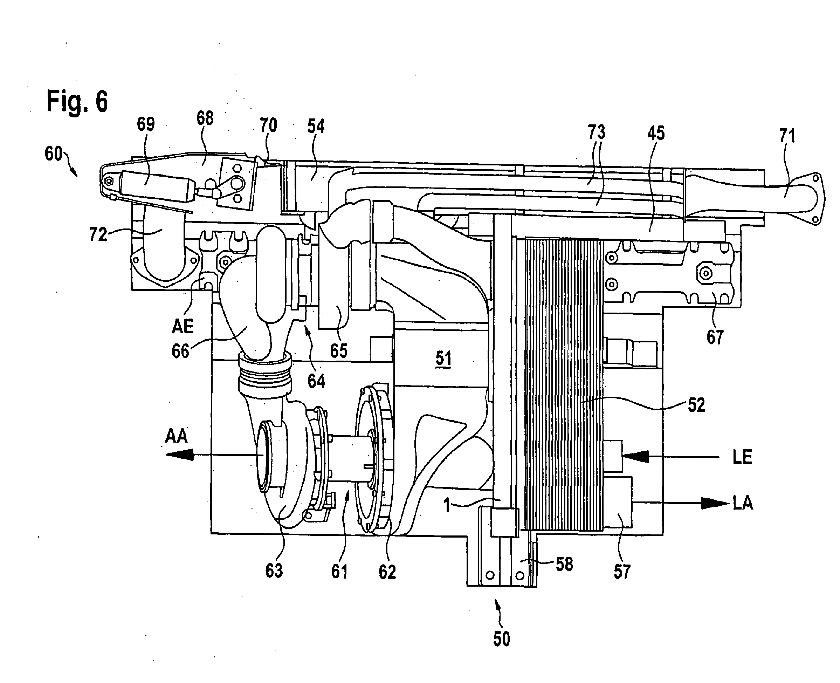

Fig. 6 zeigt eine Vorderansicht eines Systems 60 zur Ladeluftkühlung und/oder zur Turboaufladung. Gleiche Merkmale sind mit den gleichen Bezugszeichen versehen wie in den vorherigen Figuren. Das System zur Ladeluft-/Abgaskühlung und Turboaufladung 60 weist ein in Figur 5 beschriebenes Kühlmodul 50 auf.

Ferner weist das System 60 eine erste Turboladerstufe 61 und eine zweite Turboladerstufe 64 auf.

Ferner weist das System 60 eine Bypassklappe 68 bzw. ein Abgasventil 68 bzw. ein Kombiventil 68 auf, welches die Abgasrückführrate durch den Abgaskühler 54 und/oder die Leitung von Abgas durch einen Bypasskanal steuert.

Durch den Ladelufteintritt LE strömt Ladeluft in den ersten Kompressor 62 der ersten Turboladerstufe 61, wird in diesem von dem Umgebungsdruck auf einen Niederdruck verdichtet. Der Niederdruck ist höher als der Umgebungsdruck. In dem Niederdruckladeluftkühler 51 wird die Temperatur der aufgeladenen Luft abgekühlt. Das dazu erforderliche Kühlmittel strömt durch das erste Befestigungselement 1 und/oder das zweite Verbindungselement 45. Nach dem Durchströmen des Niederdruckladeluftkühlers 51 wird die Ladeluft in einer zweiten Turboladerstufe 64 mittels eines zweiten Kompressors 65 auf Hochdruckniveau verdichtet. Im Hochdruckniveau herrscht ein höherer Druck als im Niederdruckniveau. Bei dem Verdichten der Ladeluft in den zweiten Kompressor 65 erwärmt sich die Ladeluft. Die Ladeluft strömt anschließend durch den Ladelufteintrittsstutzen in den Ladelufthochdruckkühler 52, durchströmt diesen und wird dabei von Kühlmittel, welches in dem ersten Verbindungselement strömt und darüber dem Ladelufthochdruckkühler 52 zugeführt und/oder diesem abgeführt wird, abgekühlt. Die im Hochdruckladeluftkühler 52 abgekühlte Ladeluft verlässt den Hochdruckladeluftkühler 52 durch den Ladeluftaustrittsstutzen 57 und wird einem nicht dargestellten Verbrennungsmotor zugeführt.

In dem nicht dargestellten Verbrennungsmotor verbrennen Kraftstoff und zugeführte gekühlte Ladeluft zu Abgas. Bedarfsweise kann ein Teil des Abgases wieder dem Motor zugeführt werden. Dazu wird das Abgas jedoch vorher gekühlt. Abgas strömt über einen Abgaseintrittsstutzen 72 in den Abgaseintrittsdiffusor 70 und weiter durch den Abgaskühler 54. Der Abgaskühler 54 kann eine Bypassleitung aufweisen. Durch die Bypassleitung kann Abgas ungekühlt dem Verbrennungsmotor wieder zugeführt werden. Die Zuführung des rückgeführten Abgases zu dem Bypasskanal und/oder zu dem Abgaskühler 54 wird mittels des Kombiventils 68 und/oder der Bypassklappe 68 und/oder mittels des Abgasrückführventils geregelt bzw. gesteuert. Dies erfolgt mittels eines Aktuators 69. Das rückgeführte gekühlte und/oder ungekühlte Abgas wird durch den Abgasaustrittsstutzen 71 dem Verbrennungsmotor zugeführt. Über Abgaskühlmittelleitungen 73 wird Kühlmittel in den Abgaskühler geleitet bzw. aus dem Abgaskühler 54 rausgeführt.

Der nicht rückgeführte Teil des Abgases strömt durch die erste Turbine 66 der zweiten Turboladerstufe und anschließend durch die zweite Turbine 63 der ersten Turboladerstufe. Auf diese Weise treibt die erste Turbine 66 den zweiten Kompressor 65 an. Ebenso treibt die zweite Turbine 63 den ersten Kompressor 62 an. Der erste Kompressor 62 und/oder der zweite Kompressor 65 und/oder die erste Turbine 66 und/oder die zweite Turbine 63 sind jeweils im Wesentlichen, insbesondere schneckengehäuseförmig, ausgebildet. Der zweite Wärmetauscher zur Niederdruckladeluftkühlung ist insbesondere in ein nicht näher bezeichnetes Gehäuse des ersten Kompressors 62 und/oder in ein nicht näher bezeichnetes Gehäuse des zweiten Kompressors 65 integriert bzw. in diesem angeordnet. Das nicht näher bezeichnete Gehäuse des ersten Kompressors 62 und das nicht näher bezeichnete Gehäuse des zweiten Kompressors 65 können einteilig ausgebildet sein. Mittels eines dritten Motorbefestigungselements 67 ist das Kühlmodul 50 beispielsweise an einem nicht dargestellten Verbrennungsmotor befestigt. Im dargestellten Ausführungsbeispiel handelt es sich bei der ersten Turboladerstufe und/oder der zweiten Turboladerstufe bei den Turbinen um Radialturbinen und bei den Kompressoren um Radialkompressoren.

In einer anderen Ausführung handelt es sich bei der ersten Turboladerstufe und/oder der zweiten Turboladerstufe bei den Turbinen um Axialturbinen und bei den Kompressoren um Axialkompressoren.

Die Merkmale der verschiedenen Ausführungsbeispiele sind beliebig miteinander kombinierbar. Die Erfindung ist auch für andere als die gezeigten Gebiete einsetzbar. Über den Abgaseintritt AE tritt Abgas in die erste Turbine 66 ein. Nach dem Durchströmen der zweiten Turbine 63 strömt das Abgas aus dem Abgasaustritt AA aus der zweiten Turbine 63 heraus.

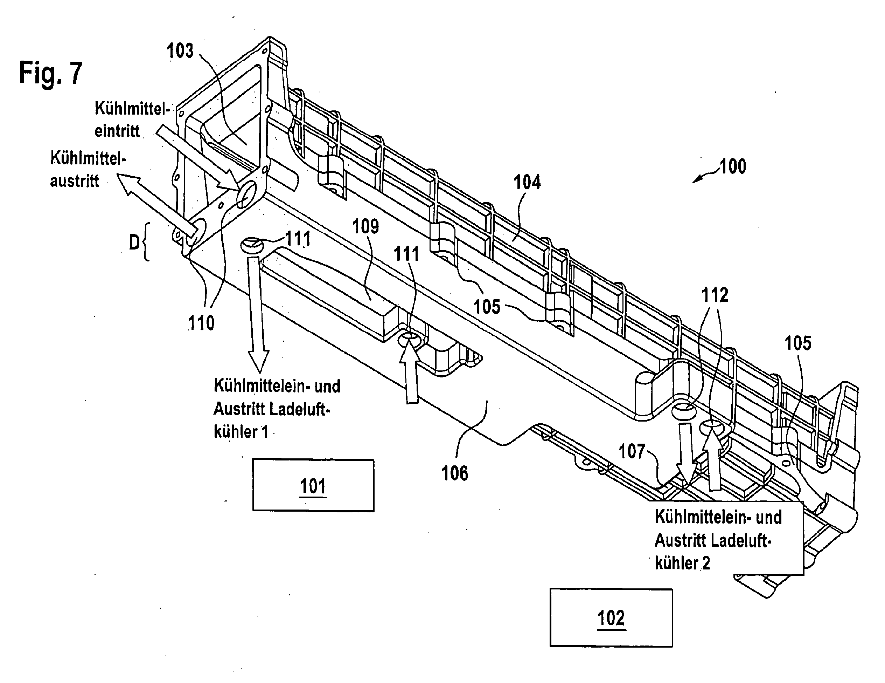

Fig. 7 zeigt eine besonders bevorzugte Ausführungsform gemäß der zweiten Variante der Erfindung in Form einer Vorrichtung zur Ladeluftkühlung für einen nicht näher dargestellten Verbrennungsmotor eines Kraftfahrzeugs mit einem ersten Wärmetauscher 101 zur Ladelufthochdruckkühlung, einem zweiten Wärmetauscher 102 zur Ladeluftniederdruckkühlung und einem dritten Wärmetauscher 103 in Form eines Abgaskühlers, welcher in nicht näher dargestellter Weise in dem in Fig. 7 gezeigten Wärmetauschergehäuse 104 angeordnet ist. Das Modul 100 sieht also drei Wärmetauscher 101, 102, 103 vor, wobei der erste Wärmetauscher 101 und der zweite Wärmetauscher 102 am Gehäuse 104 des dritten Wärmetauschers 103, beispielsweise über vorliegend als Augen mit Schraublöchern gebildete Verbindungsmittel 105, angebracht sind.

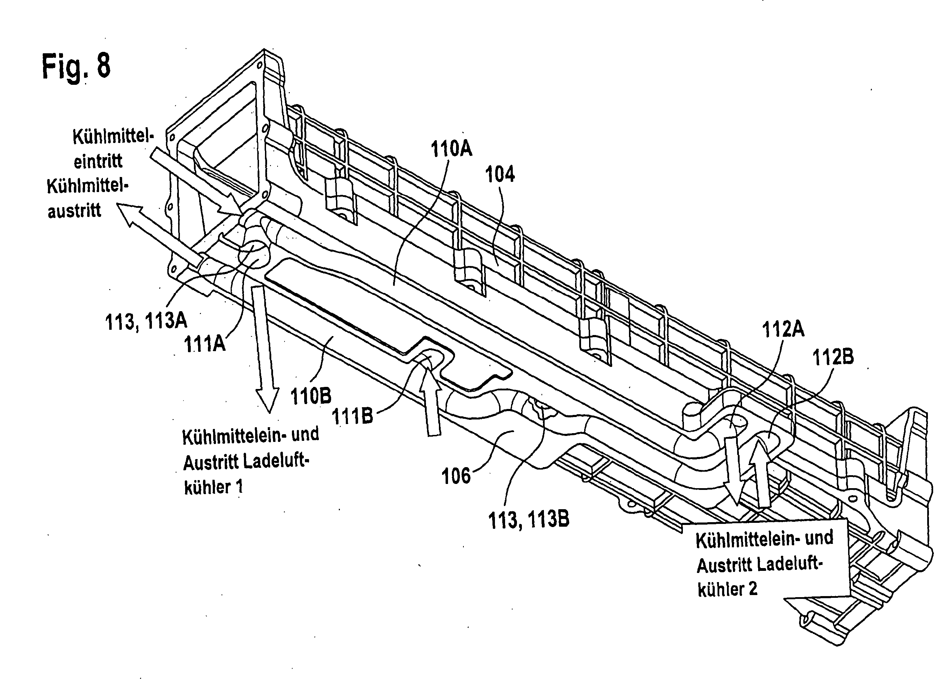

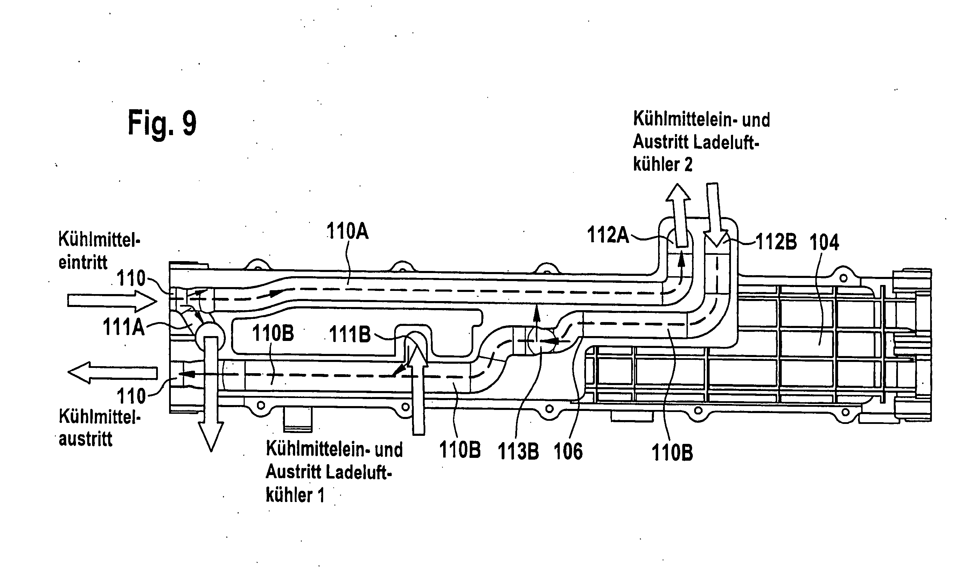

Gemäß dem Konzept der zweiten Variante der Erfindung ist vorliegend das Verbindungsmittel 106 als integraler Teil des Wärmetauschergehäuses 104 für den dritten Wärmetauscher 103 gebildet, d.h. zusammen mit dem Gehäuse 104, vorliegend als ein Aluminiumgussteil gefertigt. Das Verbindungsmittel ist vorliegend - in Abgrenzung zur ersten Variante der Erfindung - nicht als ein separat vom Gehäuse eines Wärmetauschers 101, 102, 103 bereitgestelltes Verbindungselement, beispielsweise einer Kühlmittelplatte, gebildet, sondern wird gemäß der zweiten Variante der Erfindung direkt in einem Arbeitsschritt als Teil einer Bodenwand 107 des Gehäuses 104 gebildet. Das in Fig. 7 als im Vergleich zur übrigen Bodenwand 107 ersichtlich mit einer größeren Stärke D und einer Ausnehmung 109 ausgeführte Verbindungsmittel 106 ist vorliegend mit geeigneten Öffnungen 110, 111, 112 sowie den aus Fig. 8 und Fig. 9 ersichtlichen Öffnungen 113 versehen, die als Einlass- bzw. Auslassöffnungen für sich daran anschließende aus Fig. 8 und Fig. 9 näher ersichtlichen Kühlmittelleitungen und Kanälen dienen, wobei die Kühlmittelströmung in Fig. 7, Fig. 8 und Fig. 9 durch entsprechende Pfeile dargestellt ist.

So schließt sich an die Öffnungen 110 entsprechend eine Kühlmittelzuleitung 110A und eine Kühlmittelableitung 110B an. An die Öffnungen 111 schließt sich ein Zuströmteilkanal 111A für den ersten Ladeluftkühler 101 und ein Abströmteilkanal 111 B zum ersten Ladeluftkühler 101 an. An die Öffnungen 112 schließt sich ein Zuströmteilkanal 112A und ein Abströmteilkanal 112B zur Beströmung des zweiten Ladeluftkühlers 102 an. Der Öffnung 111 ist in umgekehrter Richtung eine weitere Öffnung 113 zugeordnet, an die sich in nicht näher dargestellter Weise unter Fortsetzung der umgekehrten Richtung in das Innere des Gehäuses 104 zum dritten Wärmetauscher 103 ein Zuströmteilkanal 113A zum dritten Wärmetauscher 103 in Form eines Abgaskühlers anschließt. Entsprechend führt die weitere Öffnung 113 zu einem Abströmteilkanal 113B vom dritten Wärmetauscher 103 im Gehäuse 104.

Damit ergibt sich ein in Fig. 9 näher dargestellter Kühlmittefluss wie folgt: ein durch die obere Öffnung 110 eintretendes Kühlmittel wird unter Abzweigung nach unten einem Zuströmteilkanal 111A für den ersten Wärmetauscher 101 zugeleitet und ein zweiter Teil wird - vorliegend symbolischen durch einen Pfeil dargestellt - dem dritten Wärmetauscher 103 direkt zugeführt. Der weitere Teil des Kühlmittels wird entlang der Kühlmittelzuleitung 110A bis zu einem Zuströmteilkanal 112A für einen zweiten Wärmetauscher 102 geführt und aus diesem über den Abströmteilkanal 112B wieder herausgeführt. Anschließend wird das Kühlmittel weiter in der Kühlmittelableitung 110B geführt und mit einem Kühlmittel aus dem Abströmteilkanal 113B vom dritten Wärmetauscher 103 zusammengeführt. Des weiteren wird diesem Kühlmittelstrom das aus dem Abströmteilkanal 111 B vom ersten Wärmetauscher austretende Kühlmittel zugeführt und der dadurch gebildete Gesamtstrom des Kühlmittels weiter in der Kühlmittelableitung 110B bis zur unteren Öffnung 110 geführt, an der das Kühlmittel das Verbindungsmittel 106 wieder verlässt.

Diese Art eines Kühlmittelkreislaufs von der oberen Öffnung 110 bis zur unteren Öffnung 110 sieht also eine frühe Beströmung des ersten Wärmetauschers 101 in Form eines Hochdruckladeluftkühlers und des dritten Wärmetauschers 103 in Form eines Abgaskühlers vor und danach - am Ende der Kühlmittelzuleitung 110A - die Beströmung des zweiten Wärmetauschers 102 in Form eines Niederdruckladeluftkühlers. In umgekehrter Reihenfolge erfolgt die Zusammenführung des Kühlmittels zu dem in der Kühlmittelableitung 110B geführten Kühlmittel und einem aus dem über die Abströmteilkanal 112B zugeführten Kühlmittel. Dadurch wird eine dem entsprechenden Temperaturniveau in den Wärmetauschern 101, 102, 103 entsprechend angepasste Kühlmittelführung vorgeschlagen, die zudem der länglichen Gehäuseerstreckung vorteilhaft angepasst ist. Darüber hinaus können auch andere den thermodynamischen und konstruktiven Vorgaben eines Wärmetauschergehäuses bzw. einer Anordnung von Wärmetauschern in einem Modul Rechnung tragende Kühlmittelverläufe gemäß Leitungen und Öffnungen im Rahmen des Konzepts der Erfindung, insbesondere im Rahmen des Konzepts der ersten oder zweiten Variante der Erfindung, vorgenommen werden. Die in Bezug auf die Ausführungsform der ersten und zweiten Variante erläuterten Merkmale sind zweckmäßig miteinander kombinierbar und abwandelbar. Insbesondere sind bei der Ausführungsform gemäß der zweiten Variante Kanäle analog zur ersten Variante herstellbar - z.B. durch Gießen oder Bohren - und die Wärmetauscherrohre mit Turbulenzelementen wie Winglets oder Wellrippen versehen.

## Patentansprüche

1. Vorrichtung zur Ladeluftkühlung für einen Verbrennungsmotor eines Kraftfahrzeugs aufweisend: einen ersten Wärmetauscher (52, 101) und zumindest einen zweiten Wärmetauscher (51 , 102) sowie zumindest ein Verbindungsmittel zur Verbindung des ersten Wärmetauschers (52, 101) und des zumindest einen zweiten Wärmetauschers (51 , 102) miteinander, zumindest eine Kühlmittelzuleitung (31 , 110A) zur Beströmung zumindest eines Wärmetauschers (51 , 52, 54, 101 , 102) mit Kühlmittel, zumindest eine Kühlmittelableitung (32, 110B) zur Ableitung von Kühlmittel aus zumindest einem der Wärmetauscher (51 , 52, 54, 101 , 102), **dadurch gekennzeichnet, dass** das zumindest eine Verbindungsmittel in Form zumindest eines ersten Verbindungselements (1) gebildet ist und das erste Verbindungselement (1) eine erste Flanschfläche (9) zum Anflanschen des ersten Wärmetauschers (52) und eine zweite Flanschfläche (10) zum Anflanschen des zumindest zweiten Wärmetauschers (51) aufweist und die erste Flanschfläche (9) und die zweite Flanschfläche (10) im Wesentlichen einander gegenüberliegend angeordnet und/oder parallel zueinander angeordnet sind, wobei die zumindest eine Kühlmittelzuleitung (31 , 110A) und die zumindest eine Kühlmittelableitung (32, 110B) im Wesentlichen vollständig in dem zumindest einen Verbindungsmittel angeordnet sind.

2. Vorrichtung nach Anspruch 1 , **dadurch gekennzeichnet, dass** sich die Kühlmittelzuleitung (31 zumindest in einen ersten Zuströmteilkanal (33a, 111A) zur Beströmung des ersten (101) bzw. zweiten Wärmetauschers (52) und einen zweiten Zuströmteilkanal (33B, 112A) zur Beströmung des zweiten (102) bzw. ersten Wärmetauschers (51) verzweigt, wobei der erste Zuströmteilkanal (33A, 111A) und der zumindest eine zweite Zuströmteilkanal (33B, 112A) im Wesentlichen vollständig in dem zumindest einen Verbindungsmittel angeordnet sind.

3. Vorrichtung nach Anspruch 2, **dadurch gekennzeichnet, dass** sich der erste Strömungsteilkanal (33A) in einen dritten Zuströmteilkanal (35) und in einen vierten Zuströmteilkanal (36), verzweigt zur Beströmung des ersten Wärmetauschers (52), wobei der dritte Zuströmteilkanal (35) und der vierte Zuströmteilkanal (36) im Wesentlichen vollständig in dem zumindest einen Verbindungsmittel angeordnet sind.

4. Vorrichtung nach einem der vorhergehenden Ansprüche, **dadurch gekennzeichnet, dass** das zumindest eine Verbindungsmittel einen ersten Abströmteilkanal (37, 111 B) zur Ableitung von Kühlmittel aus dem ersten (101) bzw. zweiten Wärmetauscher (52) und zumindest einen zweiten Abströmteilkanal (34, 112B) zur Ableitung von Kühlmittel aus dem zweiten (102) bzw. ersten Wärmetauscher (51) aufweist, wobei der erste Abströmteilkanal (37, 111 B) und der zumindest eine zweite Abströmteilkanal (34, 112B) in die Kühlmittelableitung (32, 110B) münden.

5. Vorrichtung nach einem der Ansprüche 1 bis 4, **dadurch gekennzeichnet, dass** das zumindest eine Verbindungsmittel zur Verbindung mit einem dritten Wärmetauscher (103) ausgelegt ist, oder mit dem dritten Wärmetauscher (103) verbunden ist.

6. Vorrichtung nach Anspruch 5, **dadurch gekennzeichnet, dass** der dritte Wärmetauscher (103) ein Abgaswärmetauscher ist.

7. Vorrichtung nach einem der Ansprüche 1 bis 6, **dadurch gekennzeichnet, dass** der erste Wärmetauscher (52, 101) zur Ladelufthochdruckkühlung ausgebildet ist und/oder der zweite Wärmetauscher (51, 102) zur Ladeluftniederdruckkühlung ausgebildet ist.

8. Vorrichtung nach einem der Ansprüche 1 bis 7, **dadurch gekennzeichnet, dass** das zumindest eine Verbindungsmittel in Form eines von einem Gehäuse eines Wärmetauschers separat bereitgestellten ersten Verbindungselements (1) gebildet ist.

9. Vorrichtung nach einem der vorhergehenden Ansprüche, **dadurch gekennzeichnet, dass** zumindest ein zweites Verbindungselement (45) sowie ein dritter Wärmetauscher (54) zur Abgaskühlung für Abgas der Brennkraftmaschine vorgesehen ist, wobei das zweite Verbindungselement (45) zur Verbindung des dritten Wärmetauschers (54) mit dem ersten Verbindungselement (1) dient.

10. Vorrichtung nach Anspruch 7, **dadurch gekennzeichnet, dass** das erste Verbindungselement (1) und das zweite Verbindungselement (45) im Wesentlichen rechtwinklig zueinander angeordnet und/oder einteilig ausgebildet sind.

11. Vorrichtung nach einem der Ansprüche 1 bis 7, **dadurch gekennzeichnet, dass** das Verbindungsmittel als ein integraler Teil einer Wand eines Wärmetauschergehäuses (104) entlang der Längserstreckung des Gehäuses (104) gebildet ist.

12. Vorrichtung nach Anspruch 1 oder 11, **dadurch gekennzeichnet, dass** die Kühlmittelzuleitung (110A) und die Kühlmittelableitung (110B) entlang der Längserstreckung, wenigstens abschnittsweise, im Wesentlichen parallel zueinander und gegenläufig durchströmbar verlaufen.

13. Vorrichtung nach einem der Ansprüche 11 oder 12, **dadurch gekennzeichnet, dass** die Kühlmittelzuleitung (110A) und die Kühlmittelableitung (110B) getrennt sind durch einen, vorzugsweise nebeneinanderliegenden, Kühlmitteleintritt (112A) und Kühlmittelaustritt (112B) zu dem ersten oder zweiten Wärmetauscher (101 ,102).

14. Vorrichtung nach einem der Ansprüche 11 bis 13, **dadurch gekennzeichnet, dass** die Kühlmittelzuleitung (110A) zwischen einem Kühlmitteleintritt (110) und einem Zuströmteilkanal (112A) zur Beströmung des zweiten Wärmetauschers (102) bzw. ersten Wärmetauschers verläuft und/oder die Kühlmittelableitung (110B) zwischen einem Abströmteilkanal (112B) zur Beströmung des zweiten Wärmetauschers (102) bzw. ersten Wärmetauschers und einem Kühlmittelaustritt (110) verläuft.

15. Vorrichtung nach einem der Ansprüche 11 bis 14, **dadurch gekennzeichnet, dass** die Kühlmittelzuleitung (110A) eine Abzweigung für einen Zuströmteilkanal (113A) zur Beströmung des dritten Wärmetauschers (103) und die Kühlmittelableitung (110B) eine Abzweigung für einen Abströmteilkanal (113B) zur Beströmung des dritten Wärmetauschers (103) aufweist.

## Claims

1. A device for charge-air cooling for an internal combustion engine of a motor vehicle, comprising: a first heat exchanger (52, 101) and at least one second heat exchanger (51, 102) and at least one connecting means for interconnecting the first heat exchanger (52, 101) and the at least one second heat exchanger (51, 102), at least one coolant supply line (31, 110A) for supplying coolant to at least one heat exchanger (51, 52, 54, 101, 102), at least one coolant discharge line (32, 110B) for discharging coolant from at least one of the heat exchangers (51, 52, 54, 101, 102),
**characterized in that** the at least one connecting means is in the form of at least one first connecting element (1), and the first connecting element (1) comprises a first flange surface (9) for flange mounting the first heat- exchanger (52) and a second flange surface (10) for flange mounting the at least second heat exchanger (51), and the first flange surface (9) and the second flange surface (10) are disposed substantially opposite one another and/or parallel to one another, wherein the at least one coolant supply line (31, 110A) and the at least one coolant, discharge line (32, 110B) are disposed substantially entirely in the at least one connecting means.

2. The device according to claim 1, **characterized in that** the coolant supply line (31) branches into a first inflow partial channel (33a, 111A) for supplying the first heat exchanger (101) and the second heat exchanger (52), and into a second inflow partial channel (33B, 112A) for supplying the second heat exchange (102) and the first heat exchanger (51), wherein the first inflow partial channel (33A, 111A) and the at least one second inflow partial channel (33B, 112A) are disposed substantially entirely in the at least one connecting means,

3. The device according to claim 2, **characterized in that** the first inflow partial channel (33A) branches into a third inflow partiel channel (35) and into a fourth inflow partial channel (36) for supplying The first heat exchanger (52), wherein the third inflow partial channel (35) and the fourth inflow partial channel (36) are disposed substantially entirely in the at least one connecting means,

4. The device according to one of the preceding claims, **characterised in that** the at least one connecting means comprises a first outflow partial channel (37, 111B) for diverging coolant from the first heat exchanger (101) and the second heat exchanger (52), and at least one second outflow partial channel (34, 112B) for diverting coolant from the second heat exchanger (102) and the first heat exchanger (51), wherein the first outflow partial channel (37, 111B) and the at least one second outflow partial channel (34, 112B) lead into the coolant discharge line (32, 110B).

5. The device according to one of the claims 1 to 4, **characterized in that** the at least one connecting means is designed for connection to a third heat exchanger (103), or is connected to the third heat exchanger (103).

6. The device according to claim 5, **characterized in that** the third heat exchanger (103) is an exhaust gas heat exchanger.

7. The device according to one of the claims 1 to 6, **characterized in that** the first heat exchanger (52, 101) is designed for charge-air high-pressure cooling and/or the second heat changer (51, 102) is designed for charge-air low-pressure cooling.

8. The device according to one of the claims 1 to 7, **characterized in that** the at least one connecting means is in the form of a first connecting element (1) which is provided separately from a housing of a heat exchanger.

9. The device according to one of the preceding claims, **characterised in that** at least one second connecting element (45) and a third heat exchanger (54) are provided for exhaust gas cooling for exhaust of the internal combustion engine, wherein the second connecting element (45) is used to connect the third heat exchanger (54) to the first connecting element (1).

10. The device according to claim 7, **characterized in that** the first connecting element (1) and the second connecting element (45) are disposed substantially at right angles to one another and/or are designed as a single piece.

11. The device according to one of the claims 1 to 7, **characterized in that** the connecting means is designed as an integral part of a wall of a heat exchanger housing (104) along the longitudinal extension of the housing (104).

12. The device according to claim 1 or 11, **characterized in that** the coolant supply line (110A) and the coolant discharge line (110B) extend along the longitudinal extension, at least in sections, substantially parallel to one another and with opposing flow.

13. The device according to one of the claims 11 or 12, **characterized in that** the coolant supply line (110A) and the coolant discharge line (1108) are separated by a coolant inlet (112A) and a coolant outlet (112B) - which are preferable adjacent to one another - of the first or second heat exchanger (101, 102).

14. The device according to one of the claims 11. to 13, **characterized in that** the coolant supply line (110A) extends between a coolant inlet (110) and an inflow partial channel (112A) for supplying the second heat exchanger (102) or the first heat exchanger, and/or the coolant discharge line (110B) extends between an outflow partial channel (112B) for supplying the second heat exchanger (102) or the first heat exchanger and a coolant outlet (110).

15. The device according to one of the claims 11 to 14, **characterized in that** the coolant supply line (110A) comprises a branch for an inflow partial channel (113A) for supplying the third heat exchanges (103), and the coolant discharge line (110B) comprises a branch for an outflow partial channel (113B) for supplying the third heat exchanger (103).

## Revendications

1. Dispositif de refroidissement d'air de suralimentation pour un moteur à combustion interne d'un véhicule automobile, présentant : un premier échangeur de chaleur (52, 101) et au moins un deuxième échangeur de chaleur (51, 102), ainsi qu'au moins un moyen d'assemblage servant à relier, l'un à l'autre, le premier échangeur de chaleur (52, 101) et le deuxième échangeur de chaleur (51, 102) au moins au nombre de un, au moins une conduite d'alimentation en liquide de refroidissement (31, 110A) servant à l'alimentation en liquide de refroidissement d'au moins un échangeur de chaleur (51, 52, 54, 101, 102), au moins une conduite d'évacuation de liquide de refroidissement (32, 110B) servant à l'évacuation de liquide de refroidissement provenant d'au moins l'un des échangeurs de chaleur (51, 52, 54, 101, 102), **caractérisé en ce que** le moyen d'assemblage au moins au nombre de un est constitué sous la forme d'au moins un premier élément d'assemblage (1), et le premier élément d'assemblage (1) présente une première surface de bride (9) servant au bridage du premier échangeur de chaleur (52) et une deuxième surface de bride (10) servant au bridage du deuxième échangeur de chaleur (51) au moins au nombre de un, et la première surface de bride (9) et la deuxième surface de bride (10) sont disposées pratiquement en se faisant face l'une l'autre et / ou disposées de façon parallèle l'une par rapport à l'autre, où à conduite d'alimentation en liquide de refroidissement (31, 110A) au moins au nombre de un et la conduite d'évacuation de liquide de refroidissement (32, 110B) au moins au nombre de un sont disposées pratiquement en totalité dans le moyen d'assemblage au moins au nombre de un.

2. Dispositif selon la revendication 1, **caractérisé en ce que** la conduite d'alimentation en liquide de refroidissement (31) se ramifie au moins en un premier conduit partiel d'alimentation (33a, 111A) servant à l'alimentation du premier (101) ou du deuxième échangeur de chaleur (52), et en un deuxième conduit partiel d'alimentation (33b, 112A) servant à l'alimentation du deuxième (102) ou du premier échangeur de chaleur (51), où le premier conduit partiel d'alimentation (33a, 111A) et le deuxième conduit partiel d'alimentation (33b, 112A) au moins au nombre de une sont disposés pratiquement en totalité dans l'élément d'assemblage au moins au nombre de un.

3. Dispositif selon la revendication 2, **caractérisé en ce que** le premier conduit partiel d'alimentation (33a) se ramifie en un troisième conduit partiel documentation (35) et en un quatrième conduit partiel d'alimentation (36) servant à l'alimentation du premier échangeur de chaleur (52), où le troisième conduit partiel d'alimentation (35) et le quatrième conduit partiel d'alimentation (36) sont disposés pratiquement en totalité dans le moyen d'assemblage au moins au nombre de un.

4. Dispositif selon l'une quelconque des revendications précédentes, **caractérisé en ce que** le moyen d'assemblage au moins au nombre de un présente un premier conduit partiel d'évacuation (37, 111B) servant à l'évacuation de liquide de refroidissement provenant du premier (101) ou du deuxième échangeur de chaleur (52), et au moins un deuxième conduit partiel d'évacuation (34, 112B) servant à l'évacuation de liquide de refroidissement provenant du deuxième (102) ou du premier échangeur de chaleur (51), où le premier conduit partiel d'évacuation (37, 111B) et le deuxième conduit partiel d'évacuation (34, 112B3) au moins au nombre de un débouchent dans la conduite d'évacuation de liquide de refroidissement (32, 110B).

5. Dispositif selon l'une quelconque des revendications 1 à 4, **caractérisé en ce que** le moyen d'assemblage au moins au nombre de un est conçu pour l'assemblage avec un troisième échangeur de chaleur (103), ou bien est relié au troisième échangeur de chaleur (103).

6. Dispositif selon la revendication 5, **caractérisé en ce que** le troisième échangeur de chaleur (103) est un échangeur de chaleur de gaz d'échappement.

7. Dispositif selon l'une quelconque des revendications 1 à 6, **caractérisé en ce que** le premier échangeur de chaleur (52, 101) est configuré pour le refroidissement, à haute pression, de l'air de suralimentation et / ou le deuxième échangeur de chaleur (51, 102) est configuré pour le refroidissement, à basse pression, de l'air de suralimentation.

8. Dispositif selon l'une quelconque des revendications 1 à 7, **caractérisé en ce que** le moyen d'assemblage au moins au nombre de un est constitué sous la forme d'un premier élément d'assemblage (1) conçu séparément d'un carter d'un échangeur de chaleur.

9. Dispositif selon l'une quelconque des revendications précédentes, **caractérisé en ce qu'**il est prévu au moins un deuxième élément d'assemblage (45) ainsi qu'un troisième échangeur de chaleur (54) servant au refroidissement des gaz d'échappement du moteur à combustion interne, où le deuxième élément d'assemblage (45) sert à l'assemblage du troisième échangeur de chaleur (54) avec le premier élément d'assemblage (1).

10. Dispositif selon la revendication 7, **caractérisé en ce que** le premier élément d'assemblage (1) et le deuxième élément d'assemblage (45) sont disposés pratiquement à angle droit l'un par rapport à l'autre et / ou configurés en formant une seule et même pièce.

11. Dispositif selon l'une quelconque des revendications 1 à 7, **caractérisé en ce que** le moyen d'assemblage est formé, dans le sens de la longueur du carter (104), comme une pièce intégrée d'une paroi d'un carter (104) de l'échangeur de chaleur.

12. Dispositif selon la revendication 1 ou 11, **caractérisé en ce que** la conduite d'alimentation en liquide de refroidissement (110A) et la conduite d'évacuation de liquide de refroidissement (110B) s'étendent dans le sens de la langueur et, au moins partiellement, pratiquement de façon parallèle l'une par rapport à l'autre et en étant traversées par des flux opposés,

13. Dispositif selon l'une des revendications 11 ou 12, **caractérisé en ce que** la conduite d'alimentation en liquide de refroidissement (110A) et à conduite d'évacuation de liquide de refroidissement (110B) sont séparées par une entrée de liquide de refroidissement (112A) et une sortie de liquide de refroidissement (112B) se trouvant de préférence l'une à côté de l'autre et prévues pour le premier ou le deuxième échangeur de chaleur (101, 102).

14. Dispositif selon l'une quelconque des revendications 11 à 13, **caractérisé en ce que** la conduite d'alimentation en liquide de refroidissement (110A) s'étend entre une entrée de liquide de refroidissement (110) et un conduit partiel d'alimentation (112A) servant à l'alimentation du deuxième échangeur de chaleur (102) ou du premier échangeur de chaleur, et / ou la conduite d'évacuation de liquide de refroidissement (110B) s'étend entre un conduit partiel d'évacuation (112B) servant à l'alimentation du deuxième échangeur de chaleur (102) ou du premier échangeur de chaleur, et une sortie de liquide de refroidissement (110),

15. Dispositif selon l'une quelconque des revendications 11 à 14, **caractérisé en ce que** la conduite d'alimentation en liquide de refroidissement (110A) présente une ramification pour un conduit partiel d'alimentation (113A) servant à l'alimentation du troisième échangeur de chaleur (103), et à conduite d'évacuation de liquide de refroidissement (110B) présente une ramification pour un conduit partiel d'évacuation (113B) servant à l'alimentation du troisième échangeur de chaleur (103).
